(19) Europäisches Patentamt / European Patent Office / Office européen des brevets

(11) **EP 2 680 639 A1**

(12) **EUROPEAN PATENT APPLICATION**
published in accordance with Art. 153(4) EPC

(43) Date of publication:
**01.01.2014 Bulletin 2014/01**

(51) Int Cl.:
***H04W 36/00*** *(2009.01)*

(21) Application number: **12750040.3**

(22) Date of filing: **23.02.2012**

(86) International application number:
**PCT/CN2012/071511**

(87) International publication number:
**WO 2012/113338 (30.08.2012 Gazette 2012/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2011 CN 201110044676**

(71) Applicant: **Huawei Technologies Co., Ltd.
Shenzhen, Guangdong 518129 (CN)**

(72) Inventors:
• **CHEN, Dageng
Shenzhen
Guangdong 518129 (CN)**

• **NI, Jun
Shenzhen
Guangdong 518129 (CN)**
• **BI, Xiaoyan
Shenzhen
Guangdong 518129 (CN)**
• **WANG, Yi
Shenzhen
Guangdong 518129 (CN)**

(74) Representative: **Isarpatent
Patent- und Rechtsanwälte
Friedrichstrasse 31
80801 München (DE)**

(54) **METHOD AND DEVICE FOR MANAGING USER EQUIPMENT**

(57) Embodiments of the present invention disclose a method and apparatus for managing a user equipment. A long term evolution distributed antenna system LTE DAS cell including multiple antenna units AUs is divided into multiple portions, where the portion corresponds to one or multiple AUs; a resource is scheduled for a UE by taking the portion as a unit and interference control and mobility management are performed in the cell. By applying the present invention, efficiency during the interference management and handover may be improved, and system capacity may be increased.

Divide antenna units AUs in an LTE DAS cell into multiple portions — 301a

The multiple portions may adopt the same configuration or different configuration — 302a

A CU schedules a resource for a UE according to a signal sent by the UE — 303a

Receive measurement information sent by the UE through an AU, determine to perform handover, and transfer handover related information to a target CU to execute the handover — 304a

FIG. 3a

## Description

This application claims priority to Chinese Patent Application No. 201110044676.7, filed with the Chinese Patent Office on February 24, 2011 and entitled "METHOD AND APPARATUS FOR MANAGING USER EQUIPMENT", which is incorporated herein by reference in its entirety.

## FIELD OF THE INVENTION

The present invention relates to mobile communication technologies, and in particular, to a method and apparatus for managing a user equipment (UE, User Equipment).

## BACKGROUND OF THE INVENTION

A distributed antenna system (DAS, Distributed Antenna System) is proposed earliest in a 2G system, and is configured to solve a covering problem in an indoor scenario. A radio access structure of the DAS includes one or multiple antenna units (AU, Antenna Unit) and a central processing unit (CU, Central Unit), where one AU is deployed at each floor or room, one or multiple antennas is mounted at each AU and placed at a certain interval in a cell, the AU serves a UE in a covering area of the AU, and multiple AUs are connected to the CU through a cable; the CU may be a component unit in a cell base station (Node B), generally each AU sends a completely same signal, that is, in a single frequency network (SFN, Single Frequency Network) signal sending manner, areas covered by multiple AUs may form a cell; the AU in the cell has no information processing capability, and is configured to be responsible for conversion between a baseband signal and a radio frequency signal, that is, sending a signal which the CU instructs it to send, and transmit a received signal sent by the UE to the CU through the cable; the CU is configured to manage the UE according to measurement information reported by the UE through the AU, such as performing resource scheduling management and mobility management, and the UE performs joint detection on signals sent by all AUs in the cell, that is, all the AUs in the cell are AUs serving the UE. In the DAS, a covering range of each antenna is generally much smaller than that of a conventional central antenna system (CAS, Central Antenna System) in which an antenna or a base station is located centrally.

Compared with indoor covering of the CAS, indoor covering of the DAS mainly has three advantages. Firstly, because a covering range of each AU is small, a high space multiplexing gain may be obtained; secondly, the CU can perform UE radio resource scheduling, interference coordination, power control management, and so on, on each AU according to channel measurement information reported by the user equipment (UE, User Equipment) through the AU, so as to increase system capacity; thirdly, implementation of the DAS is simple; the AUs still belong to the same cell after they are connected to the CU, therefore, coordination between all of the AUs is completed in one cell, and handover and backhaul overhead are not required; compared with enhancement technologies such as the multiple user multiple input multiple output (MU-MIMO, Multiple User Multiple Input Multiple Output) antenna system and the coordinated multipoint transmission and reception (CoMP, Coordinated Multipoint Transmission and Reception), the implementation is easier.

In the 3rd generation partnership project (3GPP, 3rd Generation Partnership Project) technology specification TS25.215, the concept of a cell portion (Cell portion) is defined, and is used for identifying a semi-static geographic area in a cell; a portion identifier (portion ID) may uniquely identify a Cell portion in a cell, which is mainly used for introducing beamforming in a high speed downlink packet access (HSDPA, High Speed Downlink Packet Access) system, and used for a case that a DAS performs indoor covering in a time division-synchronous code division multiple access (TD-SCDMA, Time Division-Synchronous Code Division Multiple Access) system.

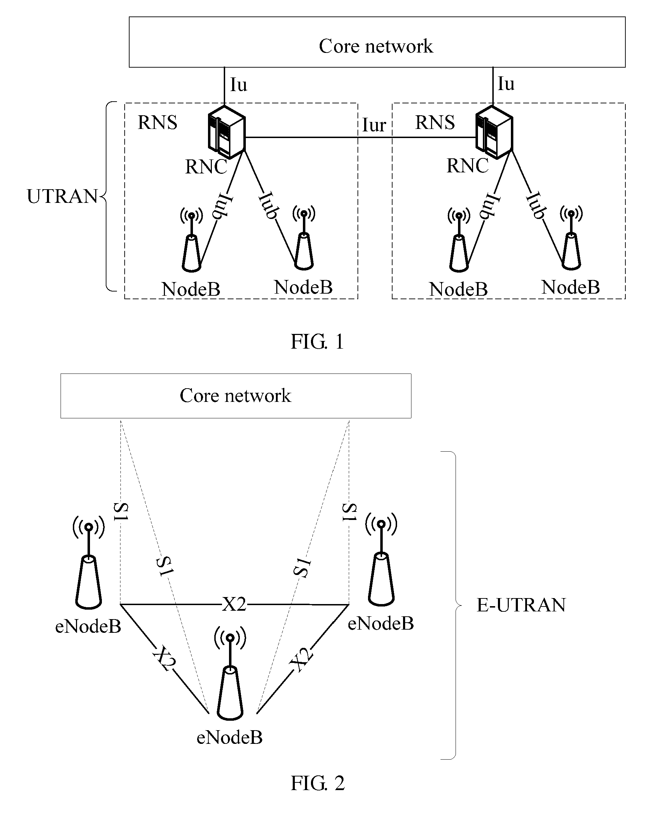

FIG. 1 is a schematic architecture diagram of an existing universal mobile telecommunications system (UMTS, Universal Mobile Telecommunications System). Referring to FIG. 1, it applies to the HSDPA and TD-SCDMA, and includes a core network (Core Network) and a UMTS terrestrial radio access network (UTRAN, Universal Terrestrial Radio Access Network), where the UTRAN is formed of a radio network subsystem (RNS, Radio Network Subsystem), the RNS includes a radio network controller (RNC, Radio Network Controller) and Node Bs, the shadow part is the covering area of a Node B, the core network is connected to the RNC through an Iu interface, the RNC is connected to a Node B through an Iub interface, and RNCs are connected through an Iur interface.

In the UMTS, the Node B is not equipped with a radio resource management (RRM, Radio Resource Management) capability, and when beamforming is required to be used, the Node B reports measurement information of each wave beam to the RNC, where the measurement information includes: received total wide band power (RTWP, Received Total Wide Band Power), a signal to interference ratio (SIR, Signal to Interference Ratio), sent carrier power, and received scheduled E-DCH power share (Received scheduled E-DCH power share RSEPS). The RNC executes RRM according to the wave beam measurement information reported by the Node B, performs interference management and mobility management by taking a cell as a unit, and allocates a portion ID to each wave beam for performing identifying.

In one aspect, the Cell portion may be used for covering a geographic area, for example, different wave beams may be selected for different geographic locations; in this way, a space division technology is used at different Cell portion areas, and a radio resource may be fully utilized, thereby increasing a repeated utilization rate of the radio resource, for example, if two Cell portions use the same radio resource simultaneously, throughput of the system may be doubled. In another aspect, the Cell portion may be used for identifying geographic location information, obtained UE location information is used for the mobility management during inter-cell handover, and because multiple Cell portions logically belong to the same cell, no mobility problem is involved between different Cell portions.

In the TD-SCDMA system, further, the HSDPA beamforming is expanded to the DAS indoor covering, and each AU is set to cover a floor or room by use of isolation of the room or floor for a radio signal; signals sent on the AUs may be completely the same, or, may be different as channel isolation between the AUs differs; the Node B reports the measurement information corresponding to each AU to the RNC, and the RNC allocates a Cell portion to each AU according to the measurement information. The AU performs distinguishing according to sent signal power of the UE; generally a threshold value is set, and if the received sent signal power of the UE is greater than the threshold value, it is determined that the UE corresponding to the received power is the UE served by the AU. As described in the foregoing, because the AUs belong to the same cell (Node B), no mobility management problem exists when the UE hands over between the AUs.

Compared with the UMTS, a long term evolution (LTE, Long Time Evolution) system uses more flattened architecture.

FIG. 2 is a schematic architecture diagram of an existing LTE system. Referring to FIG. 2, it is an evolved universal terrestrial radio access network (E-UTRAN, Evolved Universal Terrestrial Radio Access Network) system, including: a core network and evolved base stations (eNodeB, Evolved Node B), where the core network is connected to an eNodeB through an S1 interface, and the eNodeBs are connected to each other through an X2 interface. In the LTE system, the eNodeB is equipped with the RRM capability, and is not required to report the measurement information to the core network, so in the LTE system, obviously the method for managing a UE in the UMTS cannot be applied.

It may be seen from the foregoing description that, the existing UMTS system performs the interference management and mobility management by taking the cell as the unit; when the interference management is performed, according to a cell-level interference management method, that is, all of the AUs in the DAS cell reduce or increase power simultaneously, but this interference management method influences other cells neighboring it, thereby causing difficulty to the inter-cell interference management, and interference management efficiency is low; and when the mobility management is performed, resources are reserved for all of the AUs in the cell so as to be provided to a UE newly accessing the cell, in this way, resource waste is caused, and the system capacity is low; further, for the LTE system, at present, there is no relevant specific implementation solution for managing the UE.

## SUMMARY OF THE INVENTION

An embodiment of the present invention proposes a method for managing a user equipment, which improves interference management efficiency, and increases system capacity.

An embodiment of the present invention further proposes an apparatus for managing a user equipment, which improves interference management efficiency, and increases system capacity.

An embodiment of the present invention provides a method for managing a user equipment, where the method includes:

dividing a long term evolution distributed antenna system LTE DAS cell which includes multiple antenna units AUs into multiple portions, where the portion corresponds to one or multiple AUs, and the portion is used for scheduling a resource for a UE by taking the portion as a unit and performing interference control and mobility management in the LTE DAS cell.

An apparatus for managing a user equipment UE includes: a portion dividing module and a resource scheduling module, where

the portion dividing module is configured to divide a long term evolution distributed antenna system LTE DAS cell which includes multiple antenna units AUs into multiple portions, where the portion corresponds to one or multiple AUs; and
the resource scheduling module is configured to schedule a resource for a UE by taking the portion as a unit and perform interference control and mobility management in the LTE DAS cell.

It may be seen from the foregoing technical solutions that, a method and apparatus for managing a user equipment provided in the embodiments of the present invention divide the long term evolution distributed antenna system LTE DAS cell which includes multiple antenna units AUs into multiple portions, where the portion corresponds to one or multiple AUs; and schedule the resource for the UE by taking the portion as a unit and perform the interference control and mobility management in the cell. In this way, management is performed on the UE by taking an AU corresponding to the portion as the unit rather than taking the cell as the unit, thereby effectively reducing interference on an neighboring cell, and improving the interference management efficiency; and subsequently, a resource is reserved for the AU so as to be provided to a UE newly accessing the cell, improving a resource utilization rate, and elevating the system capacity.

## BRIEF DESCRIPTION OF THE DRAWINGS

FIG. 1 is a schematic architecture diagram of an existing UMTS system;

FIG. 2 is a schematic architecture diagram of an existing LTE system;

FIG. 3a is a schematic overall flowchart of a method for managing a UE according to an embodiment of the present invention;

FIG. 3b is a schematic first flowchart of a method for managing a UE according to an embodiment of the present invention;

FIG. 4 is a schematic diagram of correspondence between an AU corresponding to a divided portion and a Portion-ID according to an embodiment of the present invention;

FIG. 5 is a schematic flowchart that a UE measures a received cell-specific reference signal and obtains a CQI according to an embodiment of the present invention;

FIG. 6 is a schematic flowchart that a Portion-ID is used for selecting an AU of an LTE DAS according to a first embodiment of the present invention;

FIG. 7 is a schematic flowchart that a Portion-ID is used for mobility management of an LTE DAS according to a second embodiment of the present invention;

FIG. 8 is a schematic structural diagram that a Portion-ID is used for selecting an AU of an LTE DAS according to a third embodiment of the present invention;

FIG. 9 is a schematic structural diagram of implementing interference control and mobility management based on a Portion-ID according to a fourth embodiment of the present invention;

FIG. 10 is a schematic structural diagram of implementing wave beam selection under an AU based on a Portion-ID according to a fifth embodiment of the present invention;

FIG. 11 is a schematic structural diagram of implementing enhancement of a control channel signal and a downlink measurement reference signal based on a Portion-ID according to a sixth embodiment of the present invention; and

FIG. 12 is a schematic structural diagram of an apparatus for managing a UE according to an embodiment of the present invention.

## DETAILED DESCRIPTION OF THE EMBODIMENTS

To make the objectives, technical solutions, and advantages of the present invention clearer, the present invention is described in detail with reference to accompanying drawings and specific embodiments.

In the prior art, a Cell portion introduced in a UMTS system is used for indoor covering, influences of a room and a floor on signal attenuation are mainly considered, measurement information is reported to an RNC through a Node B, and the RNC performs interference management and mobility management on a UE by taking a cell as a unit according to the reported measurement information, which is not applicable to an LTE system with different architecture. In the embodiments of the present invention, an LTE DAS cell including multiple AUs is divided into multiple portions, and each portion corresponds to one or multiple AUs; a resource is scheduled for a UE by taking the portion as the unit and interference control and mobility management are performed in the cell. In this way, selection of an AU is implemented to serve the UE, then a resource of an AU to which the UE belongs is reserved, instead of that resources are reserved for all AUs in the cell, so as to improve the interference control and mobility management between multiple cells, and reducing resource reservation waste.

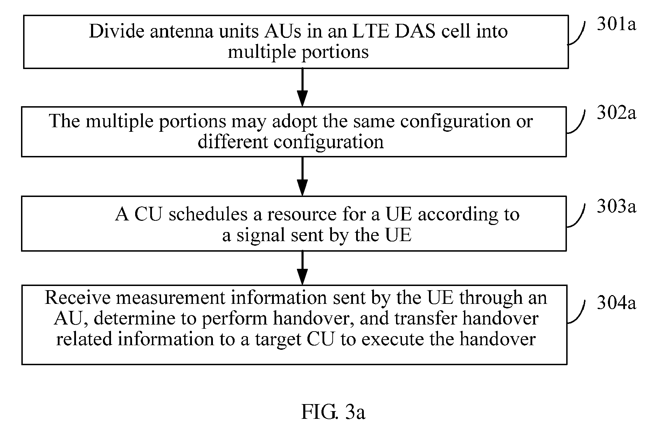

FIG. 3a is a schematic overall flowchart of a method for managing a UE according to an embodiment of the present invention. Referring to FIG. 3a, it is applied to an LTE DAS system, and a DAS applied to an LTE system and outdoor covering is considered, that is, a UE is managed in the LTE DAS system; a solution which is transparent to the UE and used for performing further subdivision on a location of the UE is adopted, that is, according to the geographic location where the UE is located, signal power of a signal sent by the UE through each AU is measured, a CU only selects an AU corresponding to the maximum signal power as the AU serving the UE, and the process includes:

Step 301a: Divide antenna units AUs in an LTE DAS cell into multiple portions.

In this step, one portion corresponds to one or multiple AUs.

The LTE DAS cell may be divided according to attenuation characteristics of a signal against a region, a covering range of each AU, a range covered by an angle of incidence in beamforming, a range covered by an angle of emergence in the beamforming, and a manner such as configuration of using different cell measurement reference signals or control channel signals between different portions in a cell, and so on.

Step 302a: Multiple portions may adopt the same configuration or different configurations.

In this step, in a set policy, the cell measurement reference signals or control channel signals may be the same, or may be different.

Step 303a: A CU schedules a resource for a UE according to a signal sent by the UE.

In this step, a downlink measurement reference signal may be sent to the UE through an AU serving the UE, and a resource is scheduled for the UE according to channel quality indicator CQI information for the sent signal, where the information is returned by the UE through the AU.

Step 304a: Receive measurement information sent by the UE through the AU, determine to perform handover, and transfer handover related information to a target CU to execute the handover.

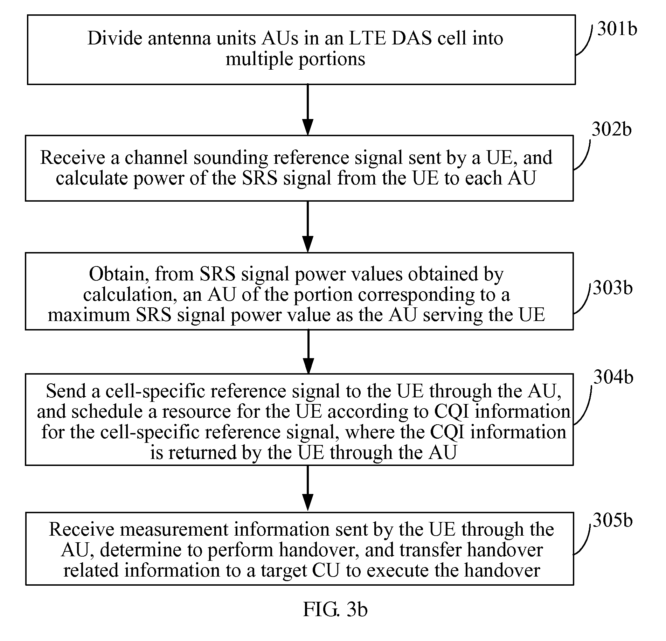

FIG. 3b is a schematic first flowchart of a method for managing a UE according to an embodiment of the present invention. Referring to FIG. 3b, it is applied to an LTE DAS system, and the process includes:

Step 301b: Divide antenna units AUs in an LTE DAS cell into multiple portions.

In this step, the LTE DAS cell including the AUs is divided into multiple portions, and each portion corresponds to one or multiple AUs; a portion identifier (Portion-ID) is allocated to each portion, and one LTE DAS cell includes at least two Portion-IDs.

The dividing the LTE DAS cell includes:

dividing the LTE DAS cell according to a region, an angle of incidence in beamforming or an angle of emergence in the beamforming, or resource configuration such as a measurement reference signal and a control channel signal in the cell, and allocating a corresponding Portion-ID. For example, Portion-IDs are separately allocated to AUs which are in the DAS and are located at different region sites; definitely, in a practical application, one Portion-ID may be allocated to multiple AUs according to a practical requirement, and the allocated Portion-ID and correspondence between a portion and an AU are stored in a CU; or, resources such as different measurement reference signals or different control signals are used in different areas of the cell according to cell characteristics, and these areas are divided into portions to which Portion-IDs are allocated.

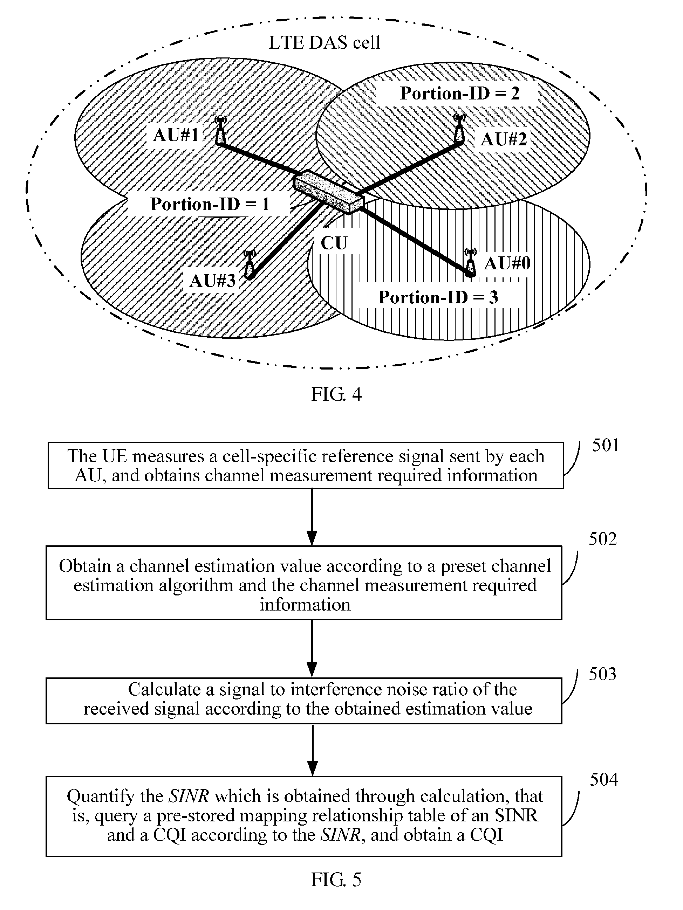

FIG. 4 is a schematic diagram of correspondence between an AU corresponding to a divided portion and a Portion-ID according to an embodiment of the present invention. Referring to FIG. 4, a cell 1 is an LTE DAS cell, and in the following description, it is abbreviated as a DAS cell, four AUs: an AU #0 to an AU #3 are placed at different sites in the cell 1, each AU is connected to the CU through a cable, area dividing is performed on the DAS cell according to the region, the DAS cell is divided into three portions: portion 1 to portion 3, and a corresponding Portion-ID: Portion-ID = 1 to 3 is allocated to each portion.

The Portion-ID corresponding to the portion 1=1, where the portion 1 includes covering areas of the AU #1 and the AU #3.

The Portion-ID corresponding to the portion 2=2, where the portion 2 includes a covering area of the AU #2.

The Portion-ID corresponding to the portion 3=3, where the portion 3 includes a covering area of the AU #0.

Step 302b: Receive a channel sounding reference signal (SRS, Sounding Reference Signal) sent by the UE, and calculate power of the SRS signal from the UE to each AU.

In this step, after the UE is switched on or initially enters a cell to perform registration, the UE sends the SRS signal, and each AU in the cell receives the SRS signal sent by the UE, and outputs it to the CU through the cable connected with the CU.

In the embodiment of the present invention, the CU may be a component unit of an eNodeB in the cell, or may be a separate entity, or may be an eNodeB.

The calculating the power of the SRS signal from the UE to each AU includes:

A: The CU performs channel estimation according to the SRS signal sent by the UE, and separately obtains a channel signal $H_i^{'}$ from the UE to each AU, where $i$ is a serial number of an AU in the cell; and

B: Separately calculate the power of the SRS signal from the UE to each AU according to the obtained channel signal $H_i^{'}$.

In this step, a formula for calculating the SRS signal power is:

$$P' = \left| H_i^{'H} H_i^{'} \right| P \tag{1}$$

In the formula:

P' is SRS signal power;
the superscript H is to perform conjugate transpose on a matrix;
∥ is to calculate a modulus of a complex number; and
P is power of a baseband signal for the SRS signal, where the SRS signal is at a sending end.

Step 303b: Obtain, from SRS signal power values obtained by calculation, an AU of a portion corresponding to a maximum SRS signal power value as the AU serving the UE.

In this step, the CU may calculate the power of the SRS signal from the UE to each AU, and then judge an area where a Portion-ID, to which the UE belongs, belongs to, according to an AU corresponding to a preset Portion-ID; the CU selects, from the SRS signal power values obtained by calculation, the AU of the portion corresponding to the maximum SRS signal power value as the AU serving the UE. In this way, one AU is selected to serve the UE and send a signal, and in this case, other AUs do not perform sending on a resource allocated to the UE, which may effectively reduce mutual interference, thereby elevating system capacity.

Step 304b: Send a cell-specific reference signal (Cell-specific Reference Signal) to the UE through the AU, and schedule the resource for the UE according to channel quality indicator (CQI, Channel Quality Indicator) information for the cell-specific reference signal, where the information is returned by the UE through the AU.

In this step, after the CU determines the AU serving the UE, the CU is further required to schedule the resource for the UE according to radio channel quality from the AU to the UE, such as reserving a resource for the AU to which the UE belongs, and performing interference management and mobility management. The interference management may be performed by measures such as reducing or improving sending power of the AU, instead of being performed by reducing or improving sending power of all AUs in the cell simultaneously.

In the embodiment of the present invention, before this step, the CU cannot obtain the radio channel quality from the AU to the UE yet, the radio channel quality is measured by sending the cell-specific reference signal; the CU uses downlink control information (DCI, Downlink Control Information) to schedule the UE, each AU sends the cell-specific reference signal to the UE in an SFN manner through a physical downlink shared channel (PDSCH, Physical Downlink Shared Channel), and the Portion-ID and related information are transferred between the eNodeBs. During cell handover, a Portion-ID area is used as a corresponding subset to perform information interaction, and perform, corresponding to originally used Portion-ID information, interference control and mobility management. Definitely, a channel state information reference signal (CSI-RS, Channel State Information Reference Signal) may also be sent, and in the embodiment of the present invention, the cell-specific reference signal and the channel state information reference signal are referred to as a downlink measurement reference signal.

Firstly, the UE measures the received cell-specific reference signal, and obtains a CQI. , the following steps are included.

FIG. 5 is a schematic flowchart that the UE measures the received cell-specific reference signal and obtains the CQI according to the embodiment of the present invention. Referring to FIG. 5, the process includes:

Step 501: The UE measures a cell-specific reference signal sent by each AU, and obtains channel measurement required information.

In this step, a cell-specific reference signal on each AU is sent in the SFN manner, therefore, a channel corresponding to the cell-specific reference signal obtained by the UE by measurement is a sum of channels from all the AUs in the cell to the UE.

Step 502: Obtain a channel estimation value according to a preset channel estimation algorithm and the channel measurement required information.

In the embodiment of the present invention, the channel refers to channels corresponding to all the AUs in the cell, and includes all factors that cause a signal change and are introduced between a sent baseband signal and a received baseband signal, for example, factors such as an influence of a radio channel, a transmitter, and a receiver on a signal, which is different from a channel in a strict sense. Reference may be made to related technology documents for details of obtaining the estimation value by using the channel estimation algorithm, which is not repeatedly described here.

Step 503: Calculate a signal to interference noise ratio (SINR, Signal to Interference Noise Ratio) of the received signal according to the obtained estimation value.

In this step, a calculation formula is:

$$SINR = \frac{|(\sum_{i=1}^{K} H_i)^H (\sum_{i=1}^{K} H_i)|}{I + N} P$$

$$(2)$$

in the formula,

$SINR$ is a signal to interference noise ratio obtained by the UE;
$K$ is the number of AUs in a cell;
$I$ is power of an interference item, and is a sum of power of received signals which are received by the UE, sent to the UE by all non-serving cells, and occupy a same frequency and time resource.

In the embodiment of the present invention, a non-serving cell refers to another cell other than the cell accessed by the UE, that is, a cell not belonging to the same CU.
$N$ is power of a white gaussian noise, which is generally introduced by a thermal noise of a channel and of a UE receiver.
$P$ is power of a baseband signal for the cell-specific reference signal at a sending end, and by default, sending power of AUs in the same cell is equal.
Hi is an equivalent channel signal which is from an AU to the UE and is formed after being influenced by a series of factors, and the so-called series of factors include factors such as a response of a radio propagation environment, a sender, and a receiver which influence a signal.
In the formula (2), by using the channel estimation algorithm, the UE obtains the sum of channel signals corresponding to all the AUs, rather than a channel signal corresponding to a single AU. According to a difference between antenna configuration of the AU and the UE, $\sum_{i=1}^{K} H_i$ may be a matrix, or may be a scalar; $I, N,$ and $P$ are all scalars.
In the embodiment of the present invention, $SINR$ s obtained by different UEs by measurement may be different, that is, the channel quality of transmission from each AU in the cell to each UE is different, and, the $SINR$ obtained by the same UE through measurement also changes as time changes.

Step 504: Quantify the $SINR$ which is obtained by calculation, that is, query a pre-stored mapping relationship table of an SINR and a CQI according to the $SINR$, and obtain the CQI.

Specifically, the UE constructs the mapping relationship table of an SINR and a CQI according to a preset algorithm used by the UE for processing a signal at a receiving end, and obtains the CQI according to the SINR obtained by calculation. For example, in the pre-stored mapping relationship table, the SINR = 0 to 5 dB, the mapped CQI = 10, and in this way, if the SINR obtained by calculation = 3 dB, the CQI obtained by quantification = 10; reference may be made to related technology documents for details of constructing the mapping relationship table, which is not repeatedly described here.

After the CQI is obtained, through a physical uplink shared channel (PUSCH, Physical Uplink Shared Channel) or physical uplink control channel (PUCCH, Physical Uplink Control Channel) scheduled by the CU, the CQI information is fed back to the CU after being transparently transmitted by an AU.

The CU, according to the obtained CQI information, allocates a radio resource to the UE after being scheduled through RRM, and sends the allocated radio resource on the selected AU which serves the UE, and reference may be made to related technology documents for details about that the CU performs RRM scheduling and allocates the radio resource, which is not repeatedly described here.

Further, the UE sends the SRS signal according to presetting, and the CU calculates the power of the SRS signal, and according to a SRS signal power value obtained by calculation, dynamically adjusts the serving AU for the UE. Furthermore, according to the CQI information returned by the UE, the resource is dynamically scheduled for the UE, so as to implement dynamic management on the UE. The SRS signal may be periodic or non-periodic, and for a non-periodic SRS signal, a triggering manner is adopted, that is, the CU requires the UE to send the SRS signal in a preset time.

In a practical application, when the UE moves between the AUs in the cell, the UE is not required to perform handover processing, and when the UE moves into another cell, it is required to perform the handover processing, therefore the embodiment of the present invention may further include:

Step 305b: Receive measurement information sent by the UE through the AU, determine to perform the handover, and transfer handover related information to the target CU to execute the handover.

In this step, a measured portion identifier and the measurement information corresponding to the portion identifier, such as the CQI information, are transferred between CUs, so as to better implement the interference control and mobility management. The UE, according to the presetting, measures power of a signal sent by the current serving cell, and if the power of the received signal is lower than a preset power threshold value, an operation of measuring sent signal power of a neighboring cell is executed, and the measurement information is sent through the AU to a source CU, that is, a source eNodeB.

In the embodiment of the present invention, after knowing by measurement the Portion-ID to which the UE belongs, the CU notifies the eNodeB, and the eNodeB and an adjacent eNodeB may transfer, through an X2 interface, handover related information: Portion-ID information and Portion-ID area related measurement information, where the measurement information includes: interference over thermal noise (IoT, Interference over Thermal Noise) measurement information, sent carrier power measurement information, relative narrowband transmission power (RNTP, Relative Narrowband Tx Power) measurement information, interference overload indication (IOI, Interference Overload Indication) measurement information and high interference indication (HII, High Interference Indication) measurement information, so as to implement the interference control and mobility management. Reference may be made to related technology documents for details about that the eNodeB executes the interference control and mobility management according to the received measurement information, which is not repeatedly described here.

It may be seen from the foregoing description that, in the embodiment of the present invention, the Portion-ID is transparent to the UE, that is, the UE is not required to know which Portion-ID it belongs to. The CU may, according to an uplink or downlink channel reciprocity manner, implement the selection of the AU and selection of a wave beam under the AU, and determine which Portion-ID the UE belongs to; after determining the Portion-ID that the UE belongs to, the CU can perform processing on the UE by taking an AU corresponding to the Portion-ID as a unit, instead of taking a cell as a unit. For example, it may be selected to only open the AU corresponding to the Portion-ID to serve the UE, and close AUs corresponding to other Portion-IDs in the cell, which effectively reduces the interference on a neighboring cell; when the RRM is performed, only a radio resource associated a certain Portion-ID may be scheduled for convenience of the interference management, which improves interference management efficiency; and, when the interference control and mobility management are performed, the AU serving the UE is determined according to the SRS signal power, the resource is only reserved for the AU so as to be provided to the UE newly accessing the cell, in this way, a resource utilization rate is improved and the system capacity is elevated. By transferring the Portion-ID and some other measurement information between CUs, the CU in the serving cell of the UE and the CU in the neighboring cell can more accurately know a location of the Portion-ID to which the UE belongs in a cell, thereby implementing more refined control and management.

Further, after the Portion-ID is introduced, the CU may perform centralized processing on the signal or radio resource in the Portion-ID, so that the signal processing in each Portion-ID may reduce processing complexity of a single cell, and, joint processing may be further performed on a signal between Portion-IDs.

It should be noted that, although in the embodiment of the present invention, the LTE DAS system is taken as an example for illustration, because the Portion-ID is transparent for the UE, an involved modification is at a side of a base station, the present invention can also be applied to other radio systems such as a global system for mobile communications (GSM, Global System for Mobile communications), an LTE frequency division duplex (FDD, Frequency Division Duplex) system or a subsequently evolved version of the LTE.

The embodiments of the present invention are further illustrated below with several specific embodiments.

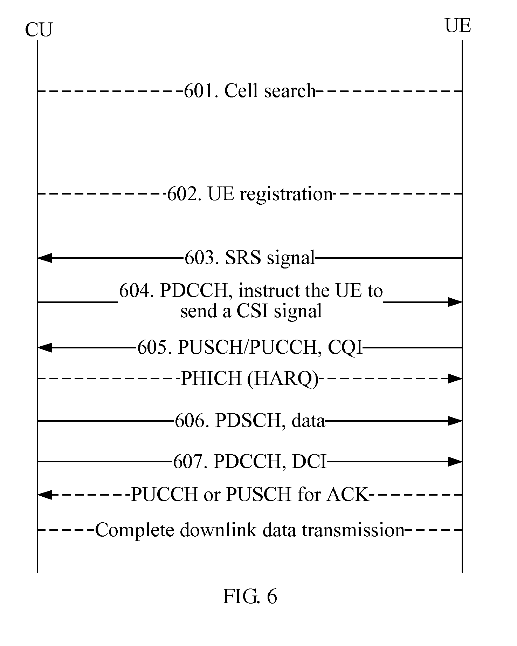

FIG. 6 is a schematic flowchart that a Portion-ID is used for selecting an AU of an LTE DAS according to a first embodiment of the present invention. Referring to FIG. 6, the process includes:

Step 601: A UE performs cell search, and obtains cell information.

In this step, the UE is synchronized to a time slot and a frame which are sent in a cell, and obtains the cell information, where the cell information includes: a cell ID, cycle prefix (CP, Cycle Prefix) length, cell bandwidth, a physical HARQ indicator channel (PHICH, Physical Hybrid ARQ Indicator Channel) structure and antenna port quantity information.

Step 602: Register with the cell.

In this step, the UE sends an RACH signal, receives a response of a CU to the RACH signal, completes alignment of uplink sending time, and sends an ID of the UE itself.

Step 603: The UE sends an SRS signal.

Step 604: A CU uses DCI to schedule the UE, and instructs the UE to send channel state information (CSI, Channel State Information).

In this step, the CU uses the DCI to schedule the UE through a PDCCH, and instructs the UE to send the CSI information.

In the embodiment of the present invention, after step 603 and before step 604, the CU may detect SRS signal power from the UE to each AU, select an AU with the maximum SRS signal power as the AU serving the UE, and allocate a Portion-ID to the AU.

Step 605: The UE measures a received cell-specific reference signal, and obtains a CQI.

In this step, the UE measures a cell-specific reference signal sent by each AU, and obtains a CQI, and a calculation formula is as that described in the foregoing; after the CQI is obtained, through a physical uplink shared channel (PUSCH, Physical Uplink Shared Channel) or physical uplink control channel (PUCCH, Physical Uplink Control Channel) scheduled by the CU, CQI information is fed back to the CU, and the CQI information is one type of the CSI information.

In a practical application, the CU, according to the CQI information fed back by the UE, may further determine whether to execute a hybrid automatic repeat request (HARQ, Hybrid Automatic Repeat Request), and if it is required to execute the HARQ, retransmission data is sent through the PDSCH.

Step 606: The CU sends data to the UE.

In this step, the CU sends the data to the UE by using a physical downlink shared channel (PDSCH, Physical Downlink Shared Channel), and performs indication of control information through the DCI on the PDCCH.

In the embodiment of the present invention, after step 605 and before step 606, the CU may, according to uplink or downlink channel reciprocity and the fed-back CQI, determine a CQI between the AU and the UE, and input determined CQI information to a scheduler in the CU, so as to determine whether to send the data to the UE, and if determined to send the data to the UE, after RRM scheduling, a radio resource is allocated to the UE, and the allocated radio resource is sent on the selected AU that serves the UE.

Step 607: The UE receives downlink data on a resource scheduled for the UE.

In this step, the UE receives the data on the PDSCH, and returns an acknowledgement (ACK, Acknowledgement) or negative acknowledgement (NACK, Negative Acknowledgement) to the CU through the PUCCH or PUSCH, where the ACK indicates that the data received by the UE on the PDSCH is correct, and the NACK indicates that an error occurs to the data received by the UE on the PDSCH.

The foregoing is a complete process that the CU sends data to the UE once, and after that, when the CU sends data to the UE again, it is not required to execute step 601 and step 602.

By far, this process ends.

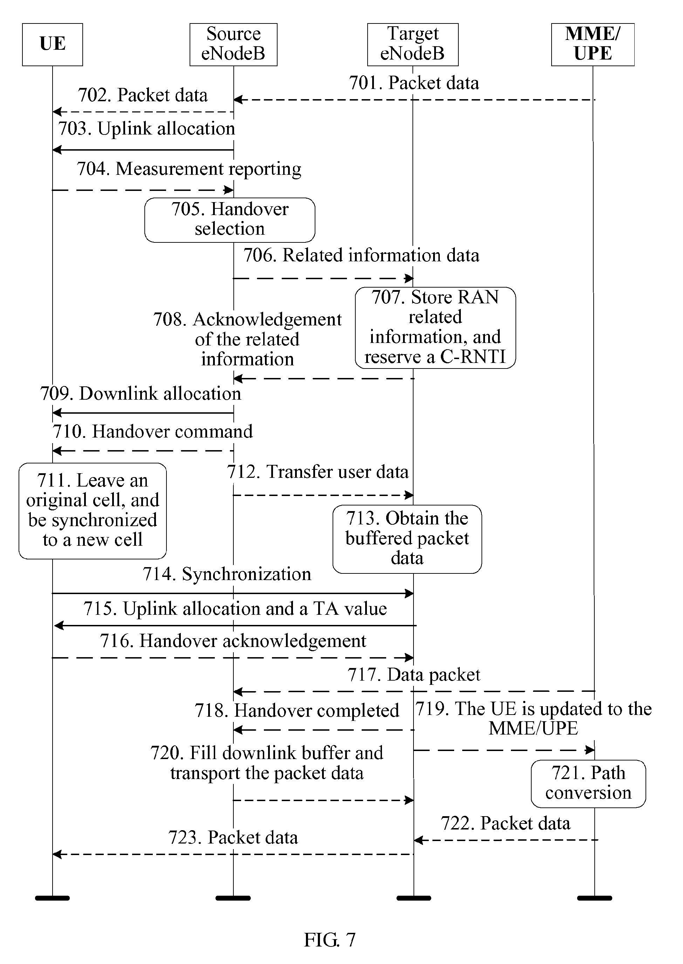

FIG. 7 is a schematic flowchart that a Portion-ID is used for mobility management of an LTE DAS according to a second embodiment of the present invention. Referring to FIG. 7, it is a mobility management process involved when a UE is handed over from a source eNodeB to a target eNodeB. The process includes:

Step 701: An MME/user plane entity (UPE, User Plane Entity) sends packet data to a source eNodeB.
Step 702: The source eNodeB sends the packet data to a UE.
Step 703: The source eNodeB performs uplink allocation on the UE.
Step 704: The UE reports measurement information to the source eNodeB.

In this step, the measurement information is measurement information specific to a Portion-ID instead of measurement information specific to a cell.

Step 705: The source eNodeB determines to perform handover selection according to the received measurement information.
Step 706: The source eNodeB sends related information data to a target eNodeB.

In this step, the related information data includes Portion-ID information and corresponding measurement information.

Step 707: The target eNodeB stores radio access network (RAN, Radio Access Network) related information of the UE, and reserves a cell radio network temporary identifier (C-RNTI, Cell Radio Network Temporary Identifier).
Step 708: The target eNodeB returns an acknowledgement of the related information to the source eNodeB, and carries a new C-RNTI.
Step 709: The source eNodeB performs downlink allocation on the UE.
Step 710: The source eNodeB sends a handover command to the UE, and carries a new C-RNTI.
Step 711: The UE leaves a source cell, and is synchronized to a target cell.
Step 712: The source eNodeB transports user data to the target eNodeB.

In this step, the source eNodeB transports buffered and sent packet data to the target eNodeB.

Step 713: The target eNodeB obtains the buffered packet data from the source eNodeB.
Step 714: The UE and the target eNodeB are synchronized.
Step 715: The target eNodeB performs uplink allocation and sets a time advance (TA, Time Advance) value on the UE.
Step 716: The UE sends handover acknowledgement information to the target eNodeB.
Step 717: The MME/UPE sends a data package to the source eNodeB.
Step 718: The target eNodeB completes handover, and sends a handover completed message to the source eNodeB.
Step 719: The UE is updated to the MME/UPE.
Step 720: The source eNodeB fills downlink buffer, and continues to transport the data package on the way of transport, that is, transport the packet data to the target eNodeB.
Step 721: The MME/UPE performs path conversion.
Step 722: The MME/UPE sends the packet data to the target eNodeB.
Step 723: The target eNodeB transports the packet data.

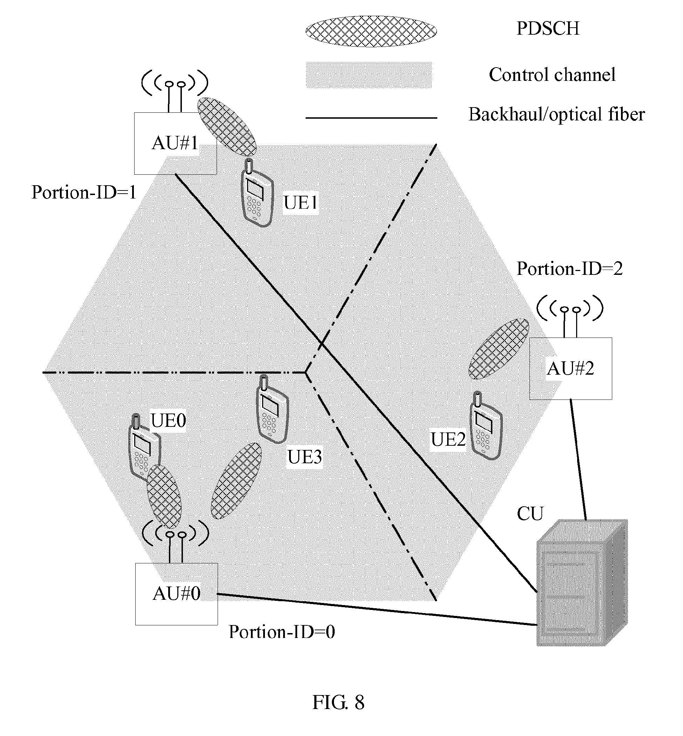

FIG. 8 is a schematic structural diagram that a Portion-ID is used for selecting an AU of an LTE DAS according to a third embodiment of the present invention. Referring to FIG. 8, a time division duplex LTE (TD-LTE, Time Division Duplex Long Time Evolution) DAS downlink is taken as an example, three AUs are placed in a cell, which are separately an AU #0 to an AU #2, and corresponding Portion-IDs are allocated to a portion that serves each AU: Portion-ID = 0 to 2, where,

a UE 1 is located in a serving area of the AU #1, and the AU #1 corresponds to the Portion-ID =1;
a UE 2 is located in a serving area of the AU #2, and the AU #2 corresponds to the Portion-ID =2;
a UE 3 and a UE 0 are located in a serving area of the AU #0, and the AU #0 corresponds to the Portion-ID = 0;
each AU is connected through an optical fiber to a CU corresponding to the cell.

After the CU schedules a resource, the three AUs uses a PDSCH channel to send data to each UE, and a control channel signal, a primary synchronization signal (PSS, Primary Synchronization Signal), a secondary synchronization signal (SSS, Secondary Synchronization Signal) and a cell-specific reference signal (Cell-specific Reference Signal) are all sent in an SFN manner, that is, a completely same signal is sent on each AU, so as to ensure signal covering. In the embodiment of the present invention, the control channel signal includes: a PDCCH signal, a PHICH signal, a physical control format indicator channel (PCFICH, Physical Control Format Indicator Channel) signal and a physical broadcast channel (PBCH, Physical Broadcast Channel) signal.

In the embodiment of the present invention, an AU serving a UE is selected under the DAS, that is, for each UE, the CU, according to factors such as obtained channel quality, allocates a radio resource to the UE after RRM scheduling, and sends the allocated radio resource on the selected AU serving the UE, and does not send it on the other AUs.

The UE obtains channel measurement information by measuring a cell common reference signal, and because a cell-specific reference signal on each AU is sent in the SFN manner, a channel obtained by the jth UE by measurement is a sum of channels $H_{0,j}$, $H_{1,j}$, and $H_{2,j}$ corresponding to the AU #0 to the AU #2, where $H_{i,j}$ denotes a channel from an AU corresponding to a Portion-ID being i to the jth UE, and $i$ is an integer. In the embodiment of the present invention, $i = 0,1,2$, $j$ is a natural number. In the embodiment of the present invention, $j$=1,2,3,4.

Then, the UE outputs an estimation value of the channel through a channel estimation algorithm, for example, in the embodiment of the present invention, the channel refers to $H_{0,j} + H_{1,j} + H_{2,j}$. An *SINR* of the received signal is calculated according to the output estimation value, and a calculation formula is:

$$SINR_j = \frac{|(H_{0,j} + H_{1,j} + H_{2,j})^H (H_{0,j} + H_{1,j} + H_{2,j})|}{I_j + N_j} P$$

$$(3)$$

in the formula,

$SINR_j$ is the *SINR* obtained by the jth UE by calculation;

$H_{i,j}$ is a channel from the AU with a Portion-ID being $i$ in the cell to the jth UE;

$I_j$ is power of an interference item, and is a sum of power of received signals which are received by the UE, sent to the UE by all non-serving cells, and occupy a same frequency and time resource.

$N_j$ is power of a white gaussian noise, which is generally introduced by a thermal noise of a radio channel and of a UE receiver.

In the formula (3), by using the channel estimation algorithm, the UE outputs the sum of $H_{0,j} + H_{1,j} + H_{2,j}$, instead of $H_{0,j}$, $H_{1,j}$ or $H_{2,j}$ in it. $H_{0,j}$, according to a difference between antenna configuration of the AU and the UE, $H_{1,j}$ and $H_{2,j}$ may be a matrix, or may be a scalar; $I_j$, $N_j$ and $P$ are all scalars.

Then, the SINR obtained by calculation is quantified, a pre-stored mapping relationship table of an SINR and a CQI is queried, and a CQI is obtained.

Then, the UE feeds the CQI obtained by calculation back to the AU, then the AU sends the CQI to the CU through the optical fiber, and the CU, according to obtained CQI information, allocates the radio resource to the UE after the RRM scheduling.

That the CU determines an AU of a serving portion for the UE is illustrated below. The CU knows and determines a Portion-ID to which the UE belongs through joint uplink SRS detection, that is, the AU serving the UE, which includes:

performing, by the CU, channel estimation according to an uplink SRS signal sent by the UE, for example, taking the UE 1 as an example, and obtaining, by the CU, channel signals $H_{0,1}^{'}$, $H_{1,1}^{'}$ and $H_{2,1}^{'}$ from the UE 1 to the AU #0-AU #2, respectively;

calculating power of the SRS signals from the UE 1 to the AU #0-AU #2 according to the obtained channel signals, where the SRS signal power may be obtained by separately calculating $\left| H_{0,1}^{'H} H_{0,1}^{'} \right| P$, $\left| H_{1,1}^{'H} H_{1,1}^{'} \right| P$ and

$\left| H_{2,1}^{'H} H_{2,1}^{'} \right| P$; and

selecting an AU corresponding to the maximum value of power values of the signals from the UE 1 to the AU #0-AU #2, where the power values are obtained by calculation, as the AU serving the UE.

Without loss of generality, assume that in the power of the signals from the UE 1 to the AU #0-AU #2, respectively, obtained by calculation, the power of the signal from the UE 1 to the AU #1 is maximum, it is determined that the AU #1 is selected as the AU serving the UE 1.

In a practical application, before sending the signal to the UE 1, the AU #1 is required to know channel quality between the AU #1 and the UE 1, so that after obtaining channel quality information, the AU #1 inputs the channel quality information to a scheduler in order to determine whether to send data to the UE 1 and how much data is sent so as to perform resource scheduling, and a calculation formula for calculating the channel quality between the AU #1 and the UE 1 is:

$$SINR_1 = \frac{|H_{1,1}{}^H H_{1,1}|}{I_1 + N_1} P \tag{4}$$

In the embodiment of the present invention, uplink or downlink channel reciprocity in a TDD system may be utilized, that is to say, channels from the UE to the AU #1, the AU #2 and the AU #0 measured by the CU are equivalent to channels from the downlink AU #1, AU #2 and AU #0 to the UE, respectively, that is, $H_{1,j} = H_{1,j}{}'$, $H_{2,j} = H_{2,j}{}'$ and $H_{0,j} = H_{0,j}{}'$.

In the formula (4), $I_1, N_1$ are the noise power of the channel and the power of the interference item of the channel that are estimated by the CU before sending data to the UE 1 through the AU, and the more accurate the estimation is, the more fully the channel can be utilized. In the embodiment of the present invention, the $I_1, N_1$ obtained by calculation of the formula (2) and the $I_1, N_1$ obtained by estimating the channel before the CU sends data are considered; there is a certain interval of time, and theoretically values of the two are not the same, but because the two differ little in the time, the two may be regarded approximately equal. In this way, the $I_1, N_1$ obtained when the AU sends data to the UE 1 is replaced with the $I, N$ obtained when the UE 1 receives the signal, and calculation complexity may be effectively simplified, therefore, in combination with the formula (2), the formula (4) may be stated as:

$$SINR_1 = \frac{|H_{1,1}{}^H H_{1,1}|}{I_1 + N_1} P = \frac{|H_{1,1}{}^H H_{1,1}|}{\left|(H_{1,1} + H_{2,1} + H_{0,1})^H (H_{1,1} + H_{2,1} + H_{0,1})\right|} SINR \tag{3}$$

In the formula (3), the *SINR* may be approximately obtained by querying the pre-stored mapping relationship table of an SINR and a CQI by using the CQI fed back by the UE, for example, a value of the *SINR* may be a median in an SINR range mapped by the fed-back CQI.

Then, the $SINR_1$ obtained by calculation is quantified, and then the pre-stored mapping relationship table of an SINR and a CQI is queried, and a CQI, that is, a CQI of the sent signal, is obtained.

Then, the CU inputs the Portion-ID of the selected AU and the CQI of the channel from the AU to the UE to the resource scheduler of the CU, and the resource scheduler, according to the received Portion-ID and CQI, performs RRM, and determines whether to send data to the UE, and how much data is sent. Reference may be made to related technology documents for a specific process that the resource scheduler performs the RRM, which is not repeatedly described here.

In a practical application, the CU may, according to the Portion-ID area to which the UE belongs, be limited in the radio resource, which is associated with the Portion-ID area of the UE, to perform the RRM. When data is sent, the AU may serve the UE by using a dedicated reference signal (DRS, Dedicated Reference Signal) signal or a demodulation reference signal (DMRS, Demodulation Reference Signal) signal as a demodulation reference signal. It should be noted that, a procedure that the CU selects an AU to serve the UE is a dynamic and continuous selection procedure, that is, before the CU sends data to the UE each time, by calculating the corresponding SINRs or signal power, an AU with the best SINR or signal power is selected from them to send data to the UE.

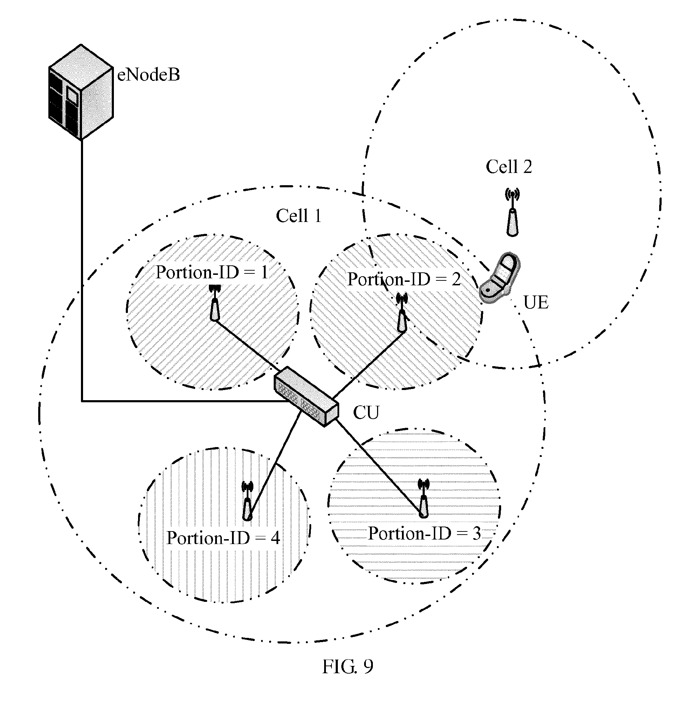

FIG. 9 is a schematic structural diagram of implementing interference control and mobility management based on a Portion-ID according to a fourth embodiment of the present invention. Referring to FIG. 9, a cell 1 is an LTE DAS cell, four AUs are placed in the cell 1, the cell 1 is divided into four Portion-ID areas according to a serving range of each AU, and a cell 2 is a neighboring cell of the cell 1. A UE is located at a boundary area between the cell 1 and the cell 2. If the cell 2 is a cell configured by the LTE DAS, a processing manner for the UE is the same as a processing manner for the cell 1. Therefore, without loss of generality, only a case of the cell 1 is considered, and in the prior art, it is required to coordinate all resources of an AU #1 to an AU #4 in the cell 1, such as power control, AU selection, and so on. In the embodiment of the present invention, after the Portion-ID is introduced, and after knowing that the UE is located at an area with the Portion-ID =2 by using the foregoing method, a CU to which the cell 1 belongs may, according to the foregoing method, only perform scheduling and power control on a radio resource related to the Portion-ID =2, thereby implementing more refined mobility management.

Specifically, after the CU knows the Portion-ID to which the UE belongs by measurement, it reports the Portion-ID to an eNodeB, and the eNodeB and an adjacent eNodeB may transfer the Portion-ID and Portion-ID area related measurement information through an X2 interface so as to implement the interference control and mobility management.

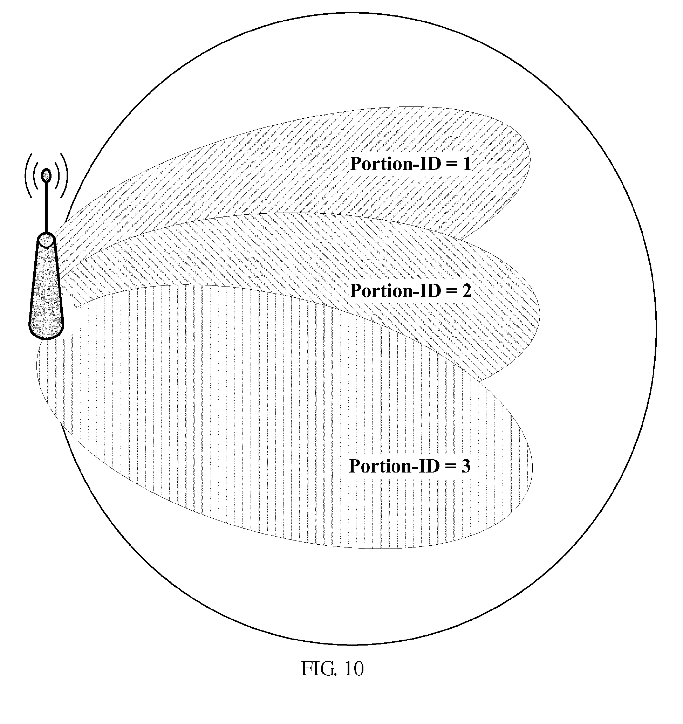

FIG. 10 is a schematic structural diagram of implementing wave beam selection under an AU based on a Portion-ID according to a fifth embodiment of the present invention. Referring to FIG. 10, in the embodiment of the present invention, a scenario that an AU covers, by using beamforming, a UE served by it in an LTE DAS cell is considered. The cell is divided into multiple portions according to the beamforming and then a Portion-ID number is allocated to each portion, so that an area served by each wave beam under an AU in the cell has a Portion-ID which can correspond to the area. When detecting a Portion-ID to which the UE belongs, a CU uses a radio resource in this Portion-ID, such as a wave beam, to serve the UE. It should be noted that, there may be no UE in one Portion-ID, or there may be one or multiple UEs.

In some of the foregoing embodiments, control channel signals including a PDCCH signal, a PHICH signal, a PCFICH signal and a PBCH signal, as well as a primary synchronization signal, a secondary synchronization signal, and a cell-specific reference signal, are all sent in an SFN manner on different AUs in the same cell, that is to say, these signals sent on each AU are the same. Further, this embodiment provides another solution, where downlink control channel signals and downlink measurement reference signals that are sent by the CU to the portions (AUs), to which the CU belongs, corresponding to different Portion-IDs may be different. Specifically speaking, the portions corresponding to different Portion-IDs in the same cell may send the same downlink control channel signal and downlink measurement reference signal, or may send a downlink control channel signal and a downlink measurement reference signal that are different from each other; and it may also be that portions corresponding to part of the Portion-IDs send the same downlink control channel signal and downlink measurement reference signal, and portions corresponding to the rest part of the Portion-IDs send a downlink control channel signal and a downlink measurement reference signal that are different from each other.

In the embodiment of the present invention, the downlink control channel refers to a physical channel that is sent by an AU to the UE and does not bear data, and for an LTE system, the downlink control channel is a PDCCH, a PHICH, a PCFICH, or a PBCH defined in the LTE specification. The CU, according to characteristics of different channels between the portions corresponding to the Portion-IDs in the cell, determines which portions in the portions corresponding to the Portion-IDs send the same control channel, and which portions in the portions corresponding to the Portion-IDs send different control channels. The so-called different control channels refer to channels which occupy a same time-frequency resource, and perform sending in a space multiplexing manner. The CU may determine whether to send the same control channel based on isolation of large-scale fading of the channels of the portions corresponding to different Portion-IDs against a signal (for example, two AUs simultaneously send signals which are different but occupy the same time-frequency resource, and although the UE can receive the signals sent on the two AUs, attenuation of a signal from an AU to the UE differs, and a signal from one of the AUs to the UE is attenuated to an extent which the UE may neglect). For example, portions corresponding to two Portion-IDs spaced far on the geographic location may use different control channels, the being far mentioned in the embodiment of the present invention refers to that portions are spaced at a certain interval on the geographic location, that is, when a signal sent by one portion corresponding to the two Portion-IDs reaches the other portion, the signal is attenuated to a negligible extent, that is, the interval on the geographic location exceeds a preset distance, thereby enhancing the downlink control channel.

The downlink measurement reference signal refers to some signals known to both the AU and the UE among non-data signals sent by the AU to the UE, and the UE measures the channel between the AU and the UE based on the downlink measurement reference signal. With respect to the LTE system, the downlink measurement reference signal is a cell-specific reference signal (Cell-specific Reference Signal) and a channel state information reference signal (CSI-RS) that are defined in the LTE specification. Similar to the foregoing enhancement of the downlink control channel by using a portion corresponding to a Portion-ID, the CU may select sending the same downlink measurement reference signal or different downlink measurement reference signals on portions corresponding to different Portion-IDs. If it is selected that different downlink measurement reference signals are sent on different portions (AUs), selection may be performed by using the isolation of large-scale fading of portions corresponding to different Portion-IDs against a signal, which is the same as the foregoing case of enhancing the downlink control channel. Moreover, a scrambling operation may be further performed on the same downlink measurement reference signal by using different scrambling codes, and then scrambled downlink measurement reference signals are used for portions corresponding to different Portion-IDs. In this case, the UE is not required to know a portion corresponding to a Portion-ID to which the UE belongs, and the CU may, in a signaling manner, notify the UE of the downlink measurement reference signal scrambled with different scrambling codes and used in the cell. In this way, capacity of the control channel in the same cell may be elevated, that is, in a case of occupying the same resource, more UEs can be supported, thereby elevating performance.

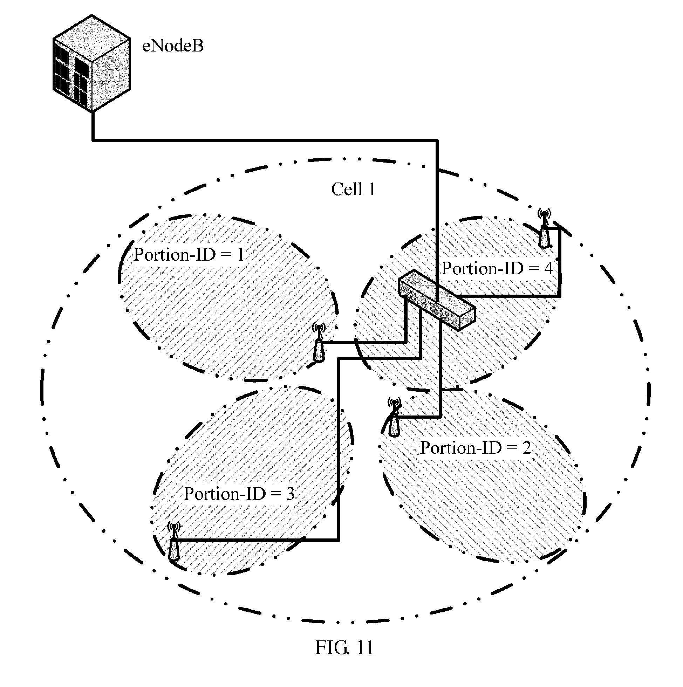

FIG. 11 is a schematic structural diagram of enhancing a downlink control channel signal and a downlink measurement reference signal based on a Portion-ID according to a sixth embodiment of the present invention. Referring to FIG. 11, geographic locations of portions corresponding to a Portion-ID = 1 and a Portion-ID = 2 are spaced far, isolation of large-scale fading of channels of the two against a signal is good, portions corresponding to a Portion-ID = 3 and a Portion-ID = 4 are geographically overlapped, which is easy to generate interference. By applying the embodiment of the present invention, a CU may use different control channel signals on the portions corresponding to the Portion-ID = 1 and the Portion-ID = 2, and use a same control channel on the portions corresponding to the Portion-ID = 3 and the Portion-ID = 4. Furthermore, the CU may further use a downlink measurement reference signal scrambled with different scrambling codes on the portions corresponding to the Portion-ID = 3 and the Portion-ID = 4, and use different downlink measurement reference signals on the portions corresponding to the Portion-ID = 1 and the Portion-ID = 2, that is, separately use different control channel signals or different downlink measurement reference signals on the portions spaced far on the geographic location, and separately use the same control channel signal or the downlink measurement reference signal scrambled with different scrambling codes on portions superposed on the geographic location. In this way, when the UE is located in an overlapped area of portions corresponding to the foregoing two Portion-IDs, descrambling processing on the received signal may still be performed, thereby distinguishing the downlink measurement reference signal.

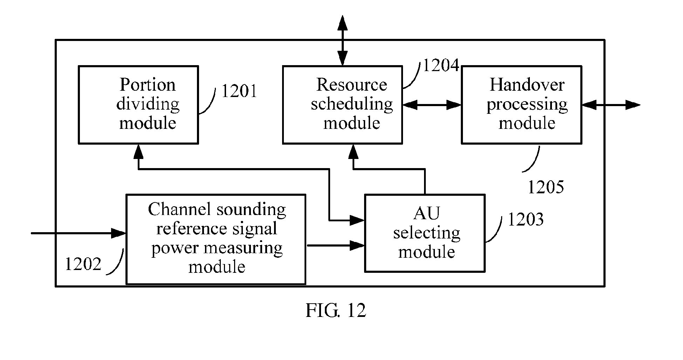

FIG. 12 is a schematic structural diagram of an apparatus for managing a user equipment according to an embodiment of the present invention. Referring to FIG. 12, the apparatus includes: a portion dividing module and a resource scheduling module.

The portion dividing module is configured to divide AUs in an LTE DAS cell into multiple portions, where the portion corresponds to one or multiple AUs.

In the embodiment of the present invention, according to attenuation characteristics of a signal against a region, a range covered by an angle of incidence in beamforming or a range covered by an angle of emergence in the beamforming, or configuration of using resources such as different measurement reference signals or control channel signals between different portions in a cell, an LTE DAS including multiple AUs is divided into multiple portions, where each portion corresponds to one or multiple AUs.

The resource scheduling module is configured to schedule a resource for a UE by taking the portion as a unit and perform interference control and mobility management in the cell.

Further, the apparatus further includes: a channel sounding reference SRS signal power measuring module, and an antenna unit AU selecting module.

The channel sounding reference signal power measuring module is configured to receive a channel sounding reference signal sent by the UE, calculate power of a channel sounding reference signal from the UE to each AU, and output the power to the AU selecting module.

In the embodiment of the present invention, the channel sounding reference signal power measuring module performs channel estimation according to the SRS signal sent by the UE, separately obtains a channel signal from the UE to each AU, and calculates the SRS signal power from the UE to each AU according to the obtained channel signal, where a formula for calculating the SRS signal power is:

$$P' = \left| H_i^{'H} H_i^{'} \right| P$$

The calculating the power of the SRS signal from the UE to each AU includes:

performing, by a central processing unit CU, the channel estimation according to the SRS signal sent by the UE, and separately obtaining a channel signal $H_i^{'}$ from the UE to each AU, where $i$ is a serial number of an AU in the cell; and

separately calculating the power of the SRS signal from the UE to each AU according to the obtained channel signal $H_i^{'}$.

The AU selecting module is configured to obtain, from SRS signal power values obtained by calculation, an AU of the portion corresponding to a maximum SRS signal power value as the AU serving the UE.

Accordingly, the resource scheduling module sends a cell-specific reference signal to the UE through the AU selected by the AU selecting module; and schedules the resource for the UE according to channel quality indicator CQI information returned by the UE for the cell-specific reference signal, where the scheduling the resource for the UE according to the channel quality indicator CQI information returned by the UE for the cell-specific reference signal includes:

measuring, by the UE, a cell-specific reference signal sent by each AU, and obtains channel measurement required information;

obtaining a channel estimation value according to a preset channel estimation algorithm and the channel measurement required information;

calculating a signal to interference noise ratio SINR of the received signal according to the obtained estimation value;

querying a pre-stored mapping relationship table of an SINR and a CQI according to the *SINR,* and obtaining a CQI from each AU to the UE; and

by using a physical uplink shared channel PUSCH or physical uplink control channel PUCCH, transparently transmitting the CQI information through the AU that serves the UE and is in the portion and then feeding the CQI information back to the CU.

Further, the apparatus further includes:

a handover processing module, receiving measurement information sent by the UE through an AU, determining to perform handover, notifying the resource scheduling module of performing scheduling, and transferring handover related information to a target cell to execute the handover.

In the embodiment of the present invention, the handover related information includes: portion identifier information and portion measurement information, where the portion measurement information includes: interference noise measurement information, sent carrier power measurement information, relative narrowband transmission power measurement information, interference overload indication measurement information, high interference indication measurement information, and so on.

**Claims**

1. A method for managing a user equipment UE, comprising:

dividing a long term evolution distributed antenna system LTE DAS cell that comprises multiple antenna units AUs into multiple portions, wherein the portion corresponds to one or multiple AUs, and the LTE DAS portion is used for scheduling a resource for a UE by taking the portion as a unit and performing interference control and mobility management in the cell.

2. The method according to claim 1, wherein the dividing the LTE DAS cell comprises:

dividing the LTE DAS cell according to attenuation characteristics of a signal against a region; or
dividing the LTE DAS cell according to a covering range of each AU; or
dividing the LTE DAS cell according to a range covered by an angle of incidence in beamforming or a range covered by an angle of emergence in the beamforming; or
dividing the LTE DAS cell according to configuration of using different measurement reference signals or control channel signals between different portions in the cell.

3. The method according to claim 2, wherein the measurement reference signals are sent between the AUs in a manner of a single frequency network signal.

4. The method according to claim 2, wherein the scheduling the resource for the UE by taking the portion as the unit comprises:

sending a downlink measurement reference signal to the UE through an AU that serves the UE and is in the portion, and scheduling the resource for the UE according to channel quality indicator CQI information for the downlink measurement reference signal, wherein the CQI information is returned by the UE through the AU that serves the UE and is in the portion.

**5.** The method according to claim 4, wherein the AU that serves the UE and is in the portion is determined though the following process:

receiving a channel sounding reference signal SRS sent by the UE, and calculating power of the SRS signal from the UE to an AU in each portion; and
from SRS signal power values obtained by calculation, obtaining an AU of the portion corresponding to a maximum SRS signal power value as the AU that serves the UE and is in the portion.

**6.** The method according to claim 5, wherein the calculating the power of the SRS signal from the UE to an AU in each portion comprises:

performing, by a central processing unit CU, channel estimation according to the SRS signal sent by the UE, and separately obtaining a channel signal $H_i^{'}$ from the UE to each AU, wherein $i$ is a serial number of an AU in the cell; and

separately calculating the power of the SRS signal from the UE to each AU according to the obtained channel signal $H_i^{'}$.

**7.** The method according to claim 6, wherein the downlink measurement reference signal is a cell-specific reference signal, and the according to the channel quality indicator CQI information for the downlink measurement reference signal, wherein the CQI information is returned by the UE through the AU that serves the UE and is in the portion comprises:

measuring, by the UE, the received cell-specific reference signal, and obtaining a CQI; and
transmitting transparently the CQI information through the AU that serves the UE and is in the portion and then feeding the CQI information back to the CU, by using a physical uplink shared channel PUSCH or a physical uplink control channel PUCCH.

**8.** The method according to claim 7, wherein the measuring, by the UE, the received cell-specific reference signal, and obtaining the CQI comprises:

measuring, by the UE, a cell-specific reference signal sent by each AU, and obtaining channel measurement required information;
obtaining a channel estimation value according to a preset channel estimation algorithm and the obtained channel measurement required information;
calculating a signal to interference noise ratio SINR of the received cell-specific reference signal according to the obtained estimation value; and
according to the *SINR* obtained by calculation, querying a pre-stored mapping relationship table of an SINR and a CQI, and obtaining a CQI from each AU to the UE.

**9.** The method according to claim 8, wherein the scheduling the resource for the UE comprises:

according to the obtained CQI information from each AU to the UE, obtaining a sum of power of each interference item and power of a white gaussian noise;
calculating an SINR of a channel between the AU serving the UE and the UE;
quantifying the *SINR* that is obtained by calculation, querying the pre-stored mapping relationship table of an SINR and a CQI, and obtaining a CQI from the AU serving the UE to the UE; and
inputting identifier information corresponding to a portion of the AU serving the UE and CQI information of the channel from the AU to the UE to a resource scheduler of the CU, and performing, by the resource scheduler, resource scheduling according to the received portion identifier and the CQI information.

**10.** The method according to claim 4, wherein based on signal isolation from large-scale fading of channels of different portions, sending the downlink measurement reference signal in a manner of space multiplexing by occupying a same time-frequency resource.

11. The method according to claim 10, further comprising:

performing, by the CU, a scrambling operation on the same downlink measurement reference signal by using different scrambling codes, then using the scrambled downlink measurement reference signals for different portions, and in a signaling manner, notifying the UE of each downlink measurement reference signal which is used in the cell and scrambled by using different scrambling codes.

12. The method according to claim 11, wherein for portions, the interval between which on a geographic location exceeds a preset distance, different control channel signals or different downlink measurement reference signals are separately used, and for portions overlapped on the geographic location, a same control channel signal or the downlink measurement reference signal scrambled by different scrambling codes is separately used.

13. The method according to any one of claims 1 to 12, further comprising:

receiving the SRS signal sent by the UE according to presetting, calculating the power of the SRS signal, and according to the SRS signal power value obtained by calculation, dynamically adjusting the AU that serves the UE and is in the portion.

14. The method according to claim 13, further comprising:

receiving the measurement information sent by the UE through the AU that serves the UE and is in the portion, determining to perform handover, and transferring handover related information to a target CU to execute the handover, wherein the handover related information comprises: portion identifier information and portion measurement information.

15. The method according to claim 14, wherein the portion measurement information comprises: interference noise measurement information, sent carrier power measurement information, relative narrowband transmission power measurement information, interference overload indication measurement information and high interference indication measurement information.

16. An apparatus for managing a user equipment UE, comprising: a portion dividing module and a resource scheduling module, wherein
the portion dividing module is configured to divide a long term evolution distributed antenna system LTE DAS cell that comprises multiple antenna units AUs into multiple portions, wherein the portion corresponds to one or multiple AUs; and
the resource scheduling module is configured to schedule a resource for the UE by taking the portion as a unit and perform interference control and mobility management in the LTE DAS cell.

17. The apparatus according to claim 16, further comprising: a channel sounding reference SRS signal power measuring module and an AU selecting module, wherein
the SRS signal power measuring module is configured to receive an SRS signal sent by the UE, calculate power of the SRS signal from the UE to each AU, and output the power to the AU selecting module;
the AU selecting module is configured to, from SRS reference signal power values obtained by calculation, obtain an AU of the portion corresponding to a maximum SRS signal power value as the AU serving the UE; and accordingly the resource scheduling module sends a cell-specific reference signal to the UE through the AU selected by the AU selecting module; and schedules the resource for the UE according to channel quality indicator CQI information returned by the UE for the cell-specific reference signal.

18. The apparatus according to claim 17, further comprising:

a handover processing module, receiving measurement information sent by the UE through an AU, determining to perform handover, notifying the resource scheduling module of performing scheduling, and transferring handover related information to a target cell to execute the handover.

19. The apparatus according to any one of claims 16 to 18, wherein
the LTE DAS cell is divided according to attenuation characteristics of a signal against a region; or
the LTE DAS cell is divided according to a covering range of each AU; or
the LTE DAS cell is divided according to a range covered by an angle of incidence in beamforming or a range covered by an angle of emergence in the beamforming; or
the LTE DAS cell is divided according to configuration of using different measurement reference signals or control channel signals between different portions in the cell.

**20.** The apparatus according to claim 19, wherein
a central processing unit CU performs channel estimation according to the SRS signal sent by the UE, and separately obtains a channel signal $H_i^{'}$ from the UE to each AU, wherein $i$ is a serial number of an AU in the cell; and
the power of the SRS signal from the UE to each AU is separately calculated according to the obtained channel signal $H_i^{'}$.

**21.** The apparatus according to claim 20, wherein the resource scheduling module according to the channel quality indicator CQI information returned by the UE for the cell-specific reference signal comprises:

measuring, by the UE, a cell-specific reference signal sent by each AU, and obtaining channel measurement required information;
obtaining a channel estimation value according to a preset channel estimation algorithm and the obtained channel measurement required information;
calculating a signal to interference noise ratio SINR of the received cell-specific reference signal according to the obtained estimation value; and
according to the *SINR* obtained by calculation, querying a pre-stored mapping relationship table of an SINR and a CQI, and obtaining a CQI from each AU to the UE; and
by using a physical uplink shared channel PUSCH or a physical uplink control channel PUCCH, transparently transmitting the CQI information through the AU that serves the UE and is in the portion and then feeding the CQI information back to the CU.

FIG. 1

FIG. 2

| Divide antenna units AUs in an LTE DAS cell into multiple portions | 301a |

| The multiple portions may adopt the same configuration or different configuration | 302a |

| A CU schedules a resource for a UE according to a signal sent by the UE | 303a |

| Receive measurement information sent by the UE through an AU, determine to perform handover, and transfer handover related information to a target CU to execute the handover | 304a |

FIG. 3a

Divide antenna units AUs in an LTE DAS cell into multiple portions ⟍ 301b

↓

Receive a channel sounding reference signal sent by a UE, and calculate power of the SRS signal from the UE to each AU ⟍ 302b

↓

Obtain, from SRS signal power values obtained by calculation, an AU of the portion corresponding to a maximum SRS signal power value as the AU serving the UE ⟍ 303b

↓

Send a cell-specific reference signal to the UE through the AU, and schedule a resource for the UE according to CQI information for the cell-specific reference signal, where the CQI information is returned by the UE through the AU ⟍ 304b

↓

Receive measurement information sent by the UE through the AU, determine to perform handover, and transfer handover related information to a target CU to execute the handover ⟍ 305b

FIG. 3b

LTE DAS cell

Portion-ID = 2

AU#1

AU#2

Portion-ID = 1

CU

AU#0

AU#3

Portion-ID = 3

FIG. 4

| The UE measures a cell-specific reference signal sent by each AU, and obtains channel measurement required information | 501 |

| Obtain a channel estimation value according to a preset channel estimation algorithm and the channel measurement required information | 502 |

| Calculate a signal to interference noise ratio of the received signal according to the obtained estimation value | 503 |

| Quantify the *SINR* which is obtained through calculation, that is, query a pre-stored mapping relationship table of an SINR and a CQI according to the *SINR*, and obtain a CQI | 504 |

FIG. 5

CU                                                                UE

- - - - - - - - - - 601. Cell search - - - - - - - - - -

- - - - - - - -602. UE registration - - - - - - - -

←—————————603. SRS signal————————

————————604. PDCCH, instruct the UE to————————→
send a CSI signal

←————————605. PUSCH/PUCCH, CQI————————

- - - - - - - - - -PHICH (HARQ) - - - - - - - -→

————————————606. PDSCH, data————————————→

————————————607. PDCCH, DCI————————————→

←- - - - - -PUCCH or PUSCH for ACK- - - - - -

- - - - -Complete downlink data transmission- - - -

FIG. 6

EP 2 680 639 A1

FIG. 7

24

PDSCH

Control channel

Backhaul/optical fiber

((oo))

AU#1

Portion-ID=1

UE1

Portion-ID=2

((oo))

AU#2

UE0

UE3

UE2

CU

((oo))

AU#0

Portion-ID=0

FIG. 8

eNodeB

Cell 2

Cell 1

Portion-ID = 1

Portion-ID = 2

UE

CU

Portion-ID = 4

Portion-ID = 3

FIG. 9

FIG. 10

eNodeB

Cell 1

Portion-ID = 1

Portion-ID = 4

Portion-ID = 3

Portion-ID = 2

FIG. 11

FIG. 12

# INTERNATIONAL SEARCH REPORT

International application No.

**PCT/CN2012/071511**

## A. CLASSIFICATION OF SUBJECT MATTER

H04W36/00(2009.01)i

According to International Patent Classification (IPC) or to both national classification and IPC

## B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS,CNTXT,VEN,3GPP: LET, DAS, SRS, CQI, cell portion, distributed antenna system, antenna, channel quality indicator, reference signal, cell, resource, divide, power

## C. DOCUMENTS CONSIDERED TO BE RELEVANT

| Category* | Citation of document, with indication, where appropriate, of the relevant passages | Relevant to claim No. |
|---|---|---|
| X | CN101965008A (ZTE CORP) 02 Feb. 2011 (02.02.2011) the description paragraphs [0002]-[0004], [0046]-[0054] | 1-4, 16, 19 |
| X | TECHNICAL SPECIFICATION GROUP SERVICES AND SYSTEM ASPECTS, 3GPP TS 25.433 version 7.16.0 Release7: Universal Mobile Telecommunications System (UMTS); UTRAN Iub interface Node B application PART (NBAP) signaling,vol 7.16.0  31 May 2010 (31.05.2010), pages 47-59, 457-460 | 1-4, 16, 19 |
| A | WO2010082756A2(LG ELECTRONICS INC) 22 Jul.2010 (22.07.2010) the whole document | 1-21 |
| A | CN101568121A (ZTE CORP) 28 Oct.2009 (28.10.2009) the whole document | 1-21 |
| A | WO2010087031A1(HITACHI LTD) 05 Aug. 2010 (05.08.2010) the whole document | 1-21 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 May 2012 (14.05.2012) | 31 May 2012 (31.05.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br>LV, Wei<br>Telephone No. (86-10)62411478 |
|---|---|

Form PCT/ISA/210 (second sheet) (July 2009)

# INTERNATIONAL SEARCH REPORT
## Information on patent family members

| International application No. |
| --- |
| **PCT/CN2012/071511** |

| Patent Documents referred in the Report | Publication Date | Patent Family | Publication Date |
| --- | --- | --- | --- |
| CN101965008A | 02. 02. 2011 | none | |
| WO2010082756A2 | 22. 07. 2010 | KR20100083684A | 22. 07. 2010 |
| | | US2011261716A1 | 27. 10. 2011 |
| | | WO2010082756A3 | 23. 09. 2010 |
| | | EP2377254A2 | 19. 10. 2011 |
| | | TN201102816P2 | 20. 01. 2012 |
| | | CN102282780A | 14. 12. 2011 |
| CN101568121A | 28. 10. 2009 | CN101568121B | 30. 11. 2011 |
| WO2010087031A1 | 05. 08. 2010 | EP2393317A1 | 07. 12. 2011 |
| | | CN102301774A | 28. 12. 2011 |
| | | US2011287791A1 | 24. 11. 2011 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110044676